# EUROPEAN PATENT APPLICATION

(11) **EP 3 253 122 A1**
(43) Date of publication of application: **06.12.2017**
(21) Application number: 16758415.0
(22) Date of filing: 06.01.2016
(51) Int. Cl.: H04W 36/18

(54) **METHOD, APPARATUS, AND SYSTEM FOR TRANSMITTING DATA DURING HANDOVER PROCEDURE**

(30) Priority: 05.03.2015 CN 201510098464
(71) Applicant: ZTE Corporation, Shenzhen, Guangdong 518057 (CN)
(72) Inventor: WANG, Xin, Shenzhen Guangdong 518057 (CN)
(74) Representative: HGF Limited
(86) International application number: PCT/CN2016/070313
(87) International publication number: WO 2016/138798

(57) **Abstract**

Provided are a method, apparatus, and system for transmitting data during a handover procedure, relating to the technical field of mobile communications. The method includes: receiving RRC signaling sent by a source MeNB, herein the RRC signaling carries first resource configuration information corresponding to a target MeNB to be accessed by a terminal and second resource configuration information corresponding to a SeNB already accessed by the terminal; when the terminal leaves a serving cell covered by the source MeNB, according to the second resource configuration information maintaining a radio connection with the serving cell of the SeNB, retaining a protocol layer at the SeNB corresponding to a Split bearer to be unchanged, and initiating a random access to the target MeNB according to the first resource configuration information. In the abovementioned technical solution, during handover of a master serving eNB of a UE, a user plane between the UE and a connected SeNB will not be interrupted, thereby improving the data transmission performance between the UE and the SeNB.

## Description

### Technical Field

The present invention relates to, but is not limited to, the technical field of mobile communications, and more particularly to a method, apparatus, and system for transmitting data during a handover procedure.

### Background

Third Generation Partnership Project (3GPP) considers that the deployment of small cells (cells which are established by low-power evolved Node Bs (eNBs), and the small cells are distinguished from macro cells established by macro eNBs, and are referred to as Small Cells) and enhancement of capabilities of the small cells is one of the most interesting issues in future communication network development. At present, a heterogeneous network deployment scenario approved widely in the communication industry is that low-power nodes are deployed within a coverage range or at a boundary of the macro eNB. The macro base station and the low-power nodes jointly form a Radio Access Network (RAN) in an Evolved Universal Terrestrial Radio Access Network (E-UTRAN) system to provide a combined data transmission service for User Equipment (UE).

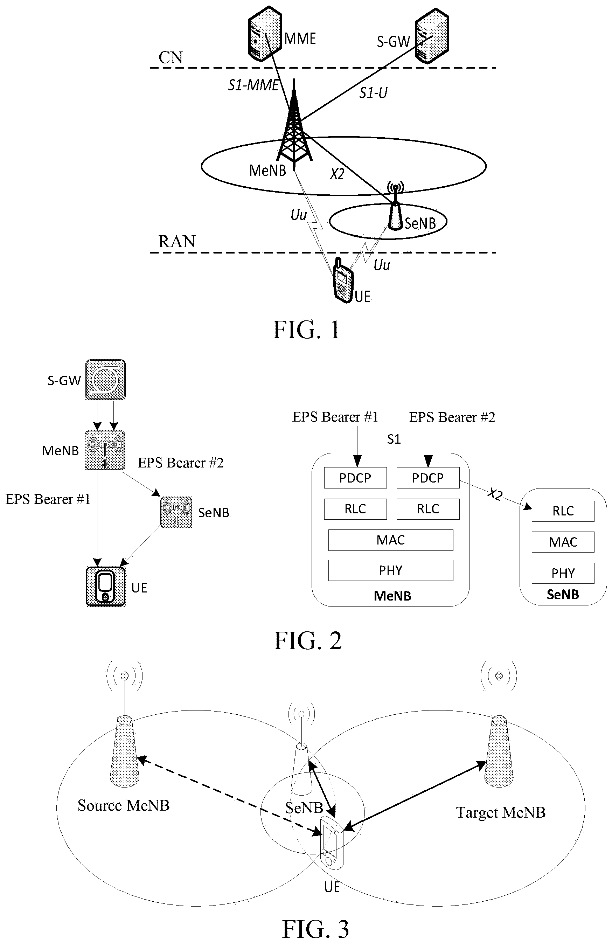

For a system architecture under the typical scenario, FIG. 1 can be referred. In the RAN, an eNB which has an S1-MME interface with a Mobility Management Entity (MME) in a Core Network (CN) and is regarded as a mobile anchor point by the CN is referred to as a Master eNB (MeNB). A node which is connected with the MeNB through an X2 interface and provides additional radio resources for the UE is referred to as a Secondary eNB (SeNB). Radio Uu interfaces are established between the UE and the MeNB and between the UE and the SeNB respectively, control plane signaling and user plane data can be transmitted on the interfaces, and this state is also referred to as Dual Connectivity (DC) of the UE. The system architecture as shown in FIG. 1 enables two (or more) eNBs to provide radio resources for one UE simultaneously to perform communication services, therefore the data throughput of the network is greatly improved, and can satisfy increasing demands of users for a data rate to the greatest extent.

For a user plane transmission mode and a protocol stack under the system architecture as shown in FIG. 1, FIG. 2 can be referred. By taking downlink data as an example, a transmission mode of an Evolved Packet System (EPS) bearer #1 is the same as a standard mode of a single connectivity system. That is, a Serving Gateway (S-GW) sends data packets to the MeNB through an S1-U interface, and then the MeNB sends the data packets to the UE through a Uu interface. In DC, the EPS bearer #1 is only located at the MeNB and only uses an MeNB resource, and such a bearer is referred to as a Master Cell Group (MCG) bearer. An EPS bearer #2 represents a data stream established between the S-GW and the UE, and the data stream needs to be transmitted through an eNB in the RAN. The transmission of the EPS bearer #2 refers to that after the S-GW sends the data packets to the MeNB through the S1-U interface, the MeNB only sends part of the data packets of the bearer to the UE through the Uu interface, and the other data packets are transferred to the SeNB through the X2 interface and then are sent to the UE by the SeNB through the Uu interface. The EPS bearer #2 is located at the MeNB and the SeNB, and needs to perform transmission by using resources of the MeNB and the SeNB, and such a bearer is referred to as a Split bearer.

From the perspective of a protocol stack, at a network side, the Split bearer is configured with a Packet Data Convergence Protocol (PDCP) entity located at the MeNB, and two sets of independent entities namely a Radio Link Control (RLC) entity and a Medium Access Control (MAC) entity and a Physical Layer (PHY), which are arranged at the MeNB and the SeNB respectively. Taking downlink data sending of the Split bearer as an example, the PDCP entity located at the MeNB transfers some PDCP Protocol Data Units (PDUs) to the RLC entity located at the SeNB through the X2 interface to be further sent, and the other PDCP PDUs are sent by the own RLC entity (and each of the lower protocol layers) of the MeNB. At a downlink data receiving end of the Split bearer, i.e., a UE side (a protocol entity thereof may be implemented inside the UE in a one-to-one correspondence manner), and after two RLC entities (and each of the lower protocol layers) corresponding to the MeNB and the SeNB respectively perform a series of processings, such as de-encapsulation on respectively received RLC PDUs, the processed PDUs are transferred to the unified PDCP entity for further transmission operation.

During data transmission and/or movement of the UE, there are two scenarios. One scenario is that, for example, when a variable in a certain protocol entity is accumulated to a certain threshold, partial configuration parameters of the UE need to be modified. The other scenario is that, for example, when the quality of a radio signal is reduced to a certain threshold or a current serving eNB is over-loaded, the serving eNB of the UE needs to be handed over from a currently-connected eNB (referred to as a source eNB or a source MeNB) to another eNB (referred to as a target eNB) which has appropriate conditions. These two scenarios need to be implemented by means of an intra-eNB handover (the UE is still connected with the same eNB before and after handover, and only some parameters are reconfigured) procedure or an inter-eNB handover (the UE is connected with different eNBs before and after handover) procedure.

Under the system architecture as shown in FIG. 1, when the MeNB of the UE in the DC state needs to be handed over, the SeNB of the UE will be released before or during the handover procedure according to the existing art. If a certain eNB with appropriate service demands and conditions still exists after the UE accesses the target eNB (for intra-eNB handover, the target eNB is an original MeNB), the target eNB will add an SeNB for the UE again. Alternatively, for intra-eNB handover, if conditions of an original SeNB always satisfy a set threshold, the MeNB may carry (intra-)handover information of the MeNB and the release and re-addition information of the SeNB in one piece of control plane signaling simultaneously, that is, the UE is indicated by means of only one piece of air interface control plane signaling to reconfigure resources of two eNBs.

Obviously, under a network-related design capacity, transmission of user plane data between the UE and the SeNB will be interrupted by the MeNB handover of the UE. Even if in an intra-MeNB handover procedure, if it spends longer time in accessing the UE to a target eNB cell, the interruption time of the user plane data between the UE and the SeNB will be lengthened accordingly, which means that radio resources capable of being provided for the UE by the network are idle. That is, the data throughput of the UE which could be increased is limited for some reasons, and the overall service performance of the network is reduced accordingly.

### Summary

The following is a summary for a subject described herein in detail. The summary is not intended to limit the scope of protection of claims.

Embodiments of the present invention provide a method, apparatus, and system for transmitting data during a handover procedure, to maintain user plane data transmission during the handover procedure.

An embodiment of the present invention provides a method for transmitting data during a handover procedure, which is applied to a terminal. The method includes:
receiving RRC signaling sent by a source MeNB, herein the RRC signaling carries first resource configuration information corresponding to a target MeNB to be accessed by the terminal and second resource configuration information corresponding to an SeNB already accessed by the terminal; and
when the terminal leaves a serving cell covered by the source MeNB, according to the second resource configuration information, maintaining a radio connection with a serving cell of the SeNB, retaining a protocol layer at the SeNB corresponding to a Split bearer to be unchanged, and initiating a random access to the target MeNB.

In an exemplary embodiment, after retaining the protocol layer part at the SeNB corresponding to a Split bearer to be unchanged, the method further includes:
transmitting user plane data of the Split bearer with the SeNB.

In an exemplary embodiment, initiating a random access to the target MeNB according to the first resource configuration information includes:
according to the first resource configuration information, reconstructing or resetting a protocol layer of an MCG bearer and a protocol layer at the target MeNB corresponding to the Split bearer, synchronizing with a serving cell of the target MeNB, and initiating random access to the serving cell of the target MeNB.

In an exemplary embodiment, transmitting user plane data of the Split bearer with the SeNB includes:
receiving scheduling information of the SeNB; and
transmitting the user plane data on the Split bearer with the SeNB according to the scheduling information.

An embodiment of the present invention also provides a method for transmitting data during a handover procedure, which is applied to a target MeNB. The method includes:
allocating resources according to a judgment result obtained in a preparation stage of the handover procedure of a terminal, and sending a handover request acknowledgment message to a source MeNB, herein the handover request acknowledgment message carries first resource configuration information corresponding to the target MeNB and second resource configuration information corresponding to an SeNB already accessed by the terminal.

In an exemplary embodiment, the method further includes: receiving an unsuccessfully-transmitted PDCP Service Data Unit (SDU) sent by the source MeNB, a cached PDCP SDU and a subsequently-received PDCP SDU. Herein, the unsuccessfully-transmitted PDCP SDU includes a PDCP SDU of which a successfully-transmitted indication from the terminal or the SeNB is not received by a PDCP sub-layer located at the source MeNB. The cached PDCP SDU includes a PDCP SDU which is not transmitted to an RLC sub-layer of the terminal or the SeNB in a PDCP sub-layer cache located at the source MeNB. The subsequently-received PDCP SDU includes a PDCP SDU which is received from an S-GW after the terminal leaves a serving cell covered by the source MeNB.

In an exemplary embodiment, the method further includes: receiving a PDCP SDU which is sent by the source MeNB and corresponds to a Split bearer, processing the received PDCP SDU corresponding to the Split bearer through a PDCP sub-layer, located at the target MeNB, of the Split bearer, and then forwarding the processed PDCP SDU to the SeNB.

An embodiment of the present invention also provides a method for transmitting data during a handover procedure, which is applied to an SeNB. The method includes:
according to second resource configuration information corresponding to the SeNB already accessed by a terminal, maintaining a radio connection with the terminal, and retaining a protocol layer of a Split bearer at the SeNB to be unchanged.

In an exemplary embodiment, the method further includes: receiving a notification from a target MeNB, and deleting the protocol layer of the Split bearer at the SeNB.

In an exemplary embodiment, deleting the protocol layer of the Split bearer at the SeNB includes:
clearing a PDCP PDU which is sent by a source MeNB and cached in an RLC sub-layer and/or releasing a resource corresponding to the Split bearer, the resource corresponding to the Split bearer referring to a resource of the Split bearer at the SeNB which is not retained any longer.

In an exemplary embodiment, the method further includes: receiving a PDCP PDU which is sent by the target MeNB, and sending the PDCP PDU to the terminal through the radio connection with the terminal.

An embodiment of the present invention also provides an apparatus for transmitting data during a handover procedure, which is arranged at a terminal. The apparatus includes a receiving module, a transmission module and an access module.

The receiving module is configured to receive RRC signaling sent by a source MeNB, herein the RRC signaling carries first resource configuration information corresponding to a target MeNB to be accessed by the terminal and second resource configuration information corresponding to an SeNB already accessed by the terminal.

The transmission module is configured to, when the terminal leaves a serving cell covered by the source MeNB, according to the second resource configuration information, maintain a radio connection with a serving cell of the SeNB, and retain a protocol layer at the SeNB corresponding to a Split bearer to be unchanged.

The access module is configured to, when the terminal leaves the serving cell covered by the source MeNB, initiate a random access to the target MeNB according to the first resource configuration information.

In an exemplary embodiment, the transmission module is further configured to,
transmit user plane data of the Split bearer with the SeNB.

In an exemplary embodiment, the access module is configured to,
according to the first resource configuration information, reconstruct or reset a protocol layer of an MCG bearer and a protocol layer at the target MeNB corresponding to the Split bearer, synchronize with a serving cell of the target MeNB, and initiate the random access to the serving cell of the target MeNB.

In an exemplary embodiment, the transmission module is configured to transmit user plane data of the Split bearer with the SeNB in the following manner:
receiving scheduling information of the SeNB; and
transmitting user plane data on the Split bearer with the SeNB according to the scheduling information.

An embodiment of the present invention also provides an apparatus for transmitting data during a handover procedure, which is arranged at a target MeNB. The apparatus includes an allocation module and a sending unit.

The allocation module is configured to allocate resources according to a judgment result obtained in a preparation stage of the handover procedure of a terminal.

The sending unit is configured to send a handover request acknowledgment message to a source MeNB. Herein, the handover request acknowledgment message carries first resource configuration information corresponding to the target MeNB and second resource configuration information corresponding to an SeNB already accessed by the terminal.

In an exemplary embodiment, the apparatus further includes a first communication module, configured to receive an unsuccessfully-transmitted PDCP SDU sent by the source MeNB, a cached PDCP SDU and a subsequently-received PDCP SDU. Herein, the unsuccessfully-transmitted PDCP SDU includes a PDCP SDU of which a successfully-transmitted indication from the terminal or the SeNB is not received by a PDCP sub-layer located at the source MeNB. The cached PDCP SDU includes a PDCP SDU which is not transmitted to an RLC sub-layer of the terminal or the SeNB in a PDCP sub-layer cache located at the source MeNB. The subsequently-received PDCP SDU includes a PDCP SDU which is received from an S-GW after the terminal leaves a serving cell covered by the source MeNB.

In an exemplary embodiment, the first communication module is further configured to receive a PDCP SDU which is sent by the source MeNB and corresponds to a Split bearer, process the received PDCP SDU corresponding to the Split bearer through a PDCP sub-layer, located at the target MeNB, of the Split bearer, and then forward the processed PDCP SDU to the SeNB.

An embodiment of the present invention also provides an apparatus for transmitting data during a handover procedure, which is arranged at an SeNB. The apparatus includes a processing module.

The processing module is configured to, according to second resource configuration information corresponding to the SeNB already accessed by a terminal, maintain a radio connection with the terminal, and retain a protocol layer of a Split bearer at the SeNB to be unchanged.

In an exemplary embodiment, the apparatus further includes a release module, configured to receive a notification from a target MeNB, and delete the protocol layer of the Split bearer at the SeNB.

In an exemplary embodiment, the release module is configured to,
clear a PDCP PDU which is sent by a source MeNB and cached in an RLC sub-layer and/or release a resource corresponding to the Split bearer, herein the resource corresponding to the Split bearer refers to a resource of the Split bearer at the SeNB which is not retained any longer.

In an exemplary embodiment, the apparatus further includes a second communication module, configured to receive a PDCP PDU which is sent by the target MeNB, and send the PDCP PDU to the terminal through the radio connection with the terminal.

An embodiment of the present invention also provides a system for transmitting data during a handover procedure, which includes: the abovementioned terminal, source MeNB, target MeNB and SeNB.

The source MeNB includes:
a communication module, configured to receive a handover request acknowledgment message sent by the target MeNB, and send RRC signaling to the terminal.

An embodiment of the present invention also provides a computer storage medium. A computer-executable instruction is stored in the computer storage medium. The computer-executable instruction is used for executing the abovementioned methods.

Compared with the existing art, during a handover of a master serving eNB of a UE, the embodiment of the present invention can improve the data transmission performance between the UE and an SeNB, and is applied to various types of eNBs. During data transmission and/or movement of a UE in a DC state, when the master serving eNB accessed by the UE is handed over, a user plane between the UE and the connected SeNB will not be interrupted, and data can be continuously transmitted. The data transmission performance and throughput of the UE are improved, the usage efficiency of radio resources is raised, and control plane signaling is saved.

After the drawings and the detailed descriptions are read and understood, other aspects can be understood.

### Brief Description of Drawings

FIG. 1 is a diagram of a heterogeneous network system architecture applied to an embodiment of the present invention.
FIG. 2 is diagrams of a user plane transmission and protocol stack applied to an embodiment of the present invention.
FIG. 3 is a diagram of an inter-eNB handover scenario example applied to an embodiment of the present invention.
FIG. 4 is a flowchart of a method for transmitting data during a handover procedure applied to a terminal according to an embodiment of the present invention.
FIG. 5 is a flowchart of a method for transmitting data during a handover procedure applied to a source MeNB according to an embodiment of the present invention.
FIG. 6 is a flowchart of a method for transmitting data during a handover procedure applied to a target MeNB according to an embodiment of the present invention.
FIG. 7 is a flowchart of a method for transmitting data during a handover procedure applied to an SeNB according to an embodiment of the present invention.
FIG. 8 is a structure diagram of an apparatus for transmitting data during a handover procedure arranged at a terminal according to an embodiment of the present invention.
FIG. 9 is a structure diagram of an apparatus for transmitting data during a handover procedure arranged at a source MeNB according to an embodiment of the present invention.
FIG. 10 is a structure diagram of an apparatus for transmitting data during a handover procedure arranged at a target MeNB according to an embodiment of the present invention.
FIG. 11 is a structure diagram of an apparatus for transmitting data during a handover procedure arranged at an SeNB according to an embodiment of the present invention.
FIG. 12 is a flow diagram of Embodiment one of the present invention.
FIG. 13 is a flow diagram of Embodiment two of the present invention.
FIG. 14 is a message diagram of Embodiment three of the present invention.

### Detailed Description

Embodiments of the present invention will be illustrated below with reference to the drawings in detail. It is important to note that the embodiments of the present invention and the characteristics in the embodiments can be randomly combined with each other under the condition of no conflicts.

In a 3GPP system, a UE, an RAN and a CN are included. Herein, the UE establishes radio connections with a source MeNB and a Secondary eNB in the RAN simultaneously; and the source MeNB and the Secondary eNB may be various types of eNBs, and an interface (such as an X2 interface) is provided therebetween. Control plane signaling and user plane data can be transmitted between the UE and the source MeNB, and user plane data can be at least transmitted between the UE and the Secondary eNB.

A system architecture, a user plane transmission model and a protocol stack form may refer to examples and relevant elaborations in FIG. 1 and FIG. 2. Herein, the source MeNB may be equivalent to an MeNB, and the Secondary eNB may be equivalent to an SeNB. The solution in the embodiment of the present invention does not limit the number of SeNBs, that is, if the UE accesses a plurality of eNBs simultaneously, the present solution is suitable likewise.

A scenario to which the embodiment of the present invention is applied is as follows.

With reference to an example in FIG. 3, during movement of the UE, the quality of a signal between the UE and a serving cell (referred to as a source cell) of a first eNB (referred to as a source MeNB) is reduced, and the quality of a signal between the UE and a serving cell (referred to as a target cell) of a third eNB (referred to as a target MeNB) is improved. At the same time, the UE is always within a coverage range of an SeNB, that is, the quality of a signal between the UE and the SeNB cell maintains good.

After asking the target MeNB for agreement, the source MeNB indicates the UE to leave the source cell and to access the target cell. An X2 interface is established between the target MeNB and the SeNB, and is responsible for transmitting control plane signaling and user plane data to the UE with a node of the CN. The handover procedure makes the target MeNB to become a new master serving eNB of the UE.

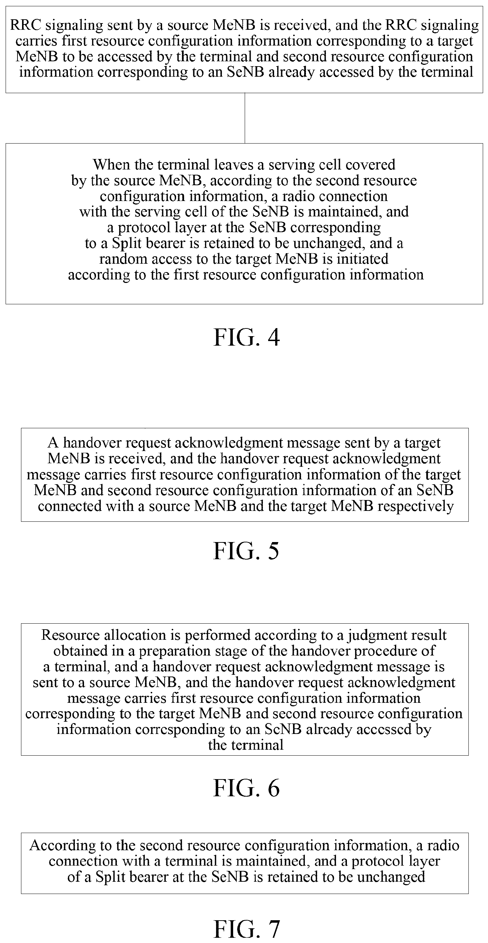

As shown in FIG. 4, an embodiment of the present invention provides a method for transmitting data during a handover procedure, which is applied to a terminal and includes the following steps.

RRC signaling sent by a source MeNB is received, herein the RRC signaling carries first resource configuration information corresponding to a target MeNB to be accessed by the terminal and second resource configuration information corresponding to an SeNB already accessed by the terminal.

In an exemplary embodiment, the first resource configuration information and the second resource configuration information include indication information for establishing or modifying or releasing a radio bearer, and indication information for amending MAC and PHY configurations.

When the terminal leaves a serving cell covered by the source MeNB, according to the second resource configuration information, a radio connection with the serving cell of the SeNB is maintained, and a protocol layer at the SeNB corresponding to a Split bearer is retained to be unchanged, and according to the first resource configuration information, a random access to the target MeNB is initiated.

In an exemplary embodiment, after retaining the protocol layer part at the SeNB corresponding to a Split bearer to be unchanged, the method further includes that:
user plane data of the Split bearer is transmitted with the SeNB.

In an exemplary embodiment, that a random access to the target MeNB is initiated according to the first resource configuration information includes:
according to the first resource configuration information, a protocol layer of an MCG bearer and a protocol layer at the target MeNB corresponding to the Split bearer are reconstructed or reset, and synchronization with a serving cell of the target MeNB is performed, and the random access to the serving cell of the target MeNB is initiated.

In an exemplary embodiment, that user plane data of the Split bearer is transmitted with the SeNB includes:
scheduling information of the SeNB is received; and
user plane data on the Split bearer is transmitted with the SeNB according to the scheduling information.

An embodiment of the present invention also provides a computer storage medium. A computer-executable instruction is stored in the computer storage medium. The computer-executable instruction is used for executing the abovementioned method.

As shown in FIG. 5, an embodiment of the present invention also provides a method for transmitting data during a handover procedure, which is applied to a source MeNB. The method includes:
a handover request acknowledgment message sent by a target MeNB is received, herein the handover request acknowledgment message carries first resource configuration information of the target MeNB and second resource configuration information of an SeNB connected with a source MeNB and the target MeNB respectively.

In an exemplary embodiment, the first resource configuration information and the second resource configuration information include indication information for establishing or modifying or releasing a radio bearer, and indication information for amending MAC and PHY configurations.

In an exemplary embodiment, the source MeNB also sends a data packet to the target MeNB, and the data packet includes: an unsuccessfully-transmitted PDCP SDU, a cached PDCP SDU and a subsequently-received PDCP SDU.

The unsuccessfully-transmitted PDCP SDU includes a PDCP SDU of which a successfully-transmitted indication from the terminal or the SeNB is not received by a PDCP sub-layer located at the source MeNB. The cached PDCP SDU includes a PDCP SDU which is not transmitted to an RLC sub-layer of the terminal or the SeNB in a PDCP sub-layer cache located at the source MeNB. The subsequently-received PDCP SDU includes a PDCP SDU which is received from an S-GW after the terminal leaves a serving cell covered by the source MeNB.

Specifically, the data packet forwarded to the target MeNB by the source MeNB includes: a PDCP SDU which is indicated to be successfully transmitted by a corresponding RLC entity (which may include an RLC entity located at the SeNB) and is not received yet by a PDCP entity, located at the source MeNB, of each data bearer when the source MeNB sends RRC signaling to the UE, an SDU which has not been transmitted in a PDCP entity cache of the source MeNB, and a PDCP SDU subsequently and newly received from an S-GW. A forwarding action is ended when the source MeNB has completely forwarded all data packets, required to be forwarded, of the UE.

An embodiment of the present invention also provides a computer storage medium. A computer-executable instruction is stored in the computer storage medium. The computer-executable instruction is used for executing the abovementioned method.

As shown in FIG. 6, an embodiment of the present invention also provides a method for transmitting data during a handover procedure, which is applied to a target MeNB. The method includes:
resources are allocated according to a judgment result obtained in a preparation stage of the handover procedure of a terminal, and a handover request acknowledgment message is sent to a source MeNB, herein the handover request acknowledgment message carries first resource configuration information corresponding to the target MeNB and second resource configuration information corresponding to an SeNB already accessed by the terminal.

In an exemplary embodiment, the first resource configuration information and the second resource configuration information include indication information for establishing or modifying or releasing a radio bearer, and indication information for amending MAC and PHY configurations.

In an exemplary embodiment, the target MeNB also receives a data packet sent by the source MeNB, and the data packet includes: an unsuccessfully-transmitted PDCP SDU, a cached PDCP SDU and a subsequently-received PDCP SDU.

The unsuccessfully-transmitted PDCP SDU includes a PDCP SDU of which a successfully-transmitted indication from the terminal or the SeNB is not received by a PDCP sub-layer located at the source MeNB. The cached PDCP SDU includes a PDCP SDU which is not transmitted to an RLC sub-layer of the terminal or the SeNB in a PDCP sub-layer cache located at the source MeNB. The subsequently-received PDCP SDU includes a PDCP SDU which is received from an S-GW after the terminal leaves a serving cell covered by the source MeNB.

In an exemplary embodiment, the method further includes that the target MeNB receives a PDCP SDU which is sent by the source MeNB and corresponds to a Split bearer; and after processing the received PDCP SDU corresponding to the Split bearer through a PDCP sub-layer, located at the target MeNB, of the Split bearer, and the target MeNB forwards the processed PDCP SDU to the SeNB.

The target MeNB judges, in the preparation stage of the handover procedure of the terminal, whether to allow access of the UE, whether a certain bearer needs to be deleted, and whether a certain bearer type is changed (for example, MCG bearer <-> Split bearer).

In an exemplary embodiment, after the random access of the terminal is successful, the target MeNB transmits control plane signaling and user plane data to the terminal.

The target MeNB allocates resources according to the judgment result obtained in the preparation stage of the handover procedure, and replies a handover request acknowledgment message to the source MeNB. Herein, the handover request acknowledgment message at least carries resource configuration information of the UE at the target MeNB and the SeNB. In an exemplary embodiment, for a resource configuration of the UE at the SeNB, the target MeNB may simply indicate that the connection and the resource configuration are unchanged. The source MeNB forms UE-oriented RRC signaling according to the received message and sends the signaling to the UE.

According to information carried in the RRC signaling, on one hand, the UE leaves the serving cell of the source MeNB, and reconstructs or resets protocol entities corresponding to protocol stacks of the MCG bearer and the Split bearer at the source MeNB according to new configurations, synchronizes with the target MeNB, and initiates a random access to the target MeNB. On the other hand, the UE maintains a radio connection with an SeNB cell, and maintains the protocol entity, corresponding to the protocol stack of the Split bearer, which is still retained at the SeNB, at the SeNB to be unchanged. In an exemplary embodiment, user plane data associated with the Split bearer still retained at the SeNB can be continued to be transmitted according to scheduling of the SeNB.

An embodiment of the present invention also provides a computer storage medium. A computer-executable instruction is stored in the computer storage medium. The computer-executable instruction is used for executing the abovementioned method.

As shown in FIG. 7, an embodiment of the present invention also provides a method for transmitting data during a handover procedure, which is applied to an SeNB. The method includes that:

According to second resource configuration information, a radio connection with a terminal is maintained, and a protocol layer of a Split bearer at the SeNB is retained to be unchanged.

In an exemplary embodiment, the SeNB also deletes the protocol layer of the Split bearer at the SeNB.

Herein, deleting the protocol layer of the Split bearer at the SeNB includes:
a PDCP PDU which is sent by a source MeNB and cached in an RLC sub-layer is cleared, and/or a resource corresponding to the Split bearer is released, herein the resource corresponding to the Split bearer refers to a resource of the Split bearer at the SeNB which is not retained any longer.

This step is made by a control plane, and is determined by a target MeNB, and is executed when the SeNB receives a notification from the target MeNB.

In an exemplary embodiment, the SeNB receives a PDCP PDU sent by the target MeNB, and sends the PDCP PDU to the terminal through the radio connection with the terminal.

Herein, an SDU is a data packet which is just received by a protocol sub-layer and has not been encapsulated by the protocol sub-layer, and a PDU is a data packet which has been encapsulated by the protocol sub-layer and is about to be sent to a next protocol sub-layer.

For example, for a PDCP (mainly responsible for encryption), the source MeNB sends the PDCP SDU to the target MeNB, and the target MeNB transfers the processed PDCP PDU, such as the encrypted PDCP PDU, to the SeNB (RLC sub-layer) for further transmission.

Release of an X2 interface associated with the UE between the source MeNB and the SeNB may adopt two manners, a source MeNB trigger manner or an SeNB trigger manner. After the release procedure is completed, for a Split bearer still retained at the SeNB, if there is still an PDCP PDU transferred from the source MeNB in an RLC entity cache corresponding to the bearer, the SeNB clears the PDU, but resource configuration is unchanged. For a Split bearer which is not retained at the SeNB any longer, the SeNB releases a resource corresponding to the bearer.

For the Split bearer still retained at the SeNB for transmission, the target MeNB performs a PDCP encapsulation on the received and forwarded data packet, and transfers it to the SeNB for transmission. If there are data packets which have not been sent in the RLC entity cache corresponding to the Split bearer when the SeNB receives a first PDCP PDU from the target MeNB, the SeNB will not send these data packets but abandon these data packets, that is, the SeNB will send the data packet from the target MeNB as quickly as possible.

Here, the following three situations are expressed.
1. If a Split bearer is still retained at the original SeNB, the SeNB will clear the cached data packets at the appropriate time (the latest time is when the data packet sent by the target MeNB is received), but the corresponding resource is not released, and the SeNB will continue to work.
2. If the Split bearer is not at the original SeNB for transmission after handover of the MeNB (probably only at the target MeNB for transmission or charged by other SeNBs), the original SeNB will clear the data packets and release a resource after receiving the control plane signaling of the target MeNB.
3. If the Split bearer is not accepted by the target MeNB, that is, will be entirely released, the original SeNB will clear the data packets and release a resource after receiving the control plane signaling of the target MeNB.

The interpretation and relevant operations of the SeNB on the control plane signaling are identical for the conditions 2 and 3.

The method in the embodiment of the present invention is applied to an intra-eNB handover procedure and an inter-eNB handover procedure.

An embodiment of the present invention also provides a computer storage medium. A computer-executable instruction is stored in the computer storage medium. The computer-executable instruction is used for executing the abovementioned method.

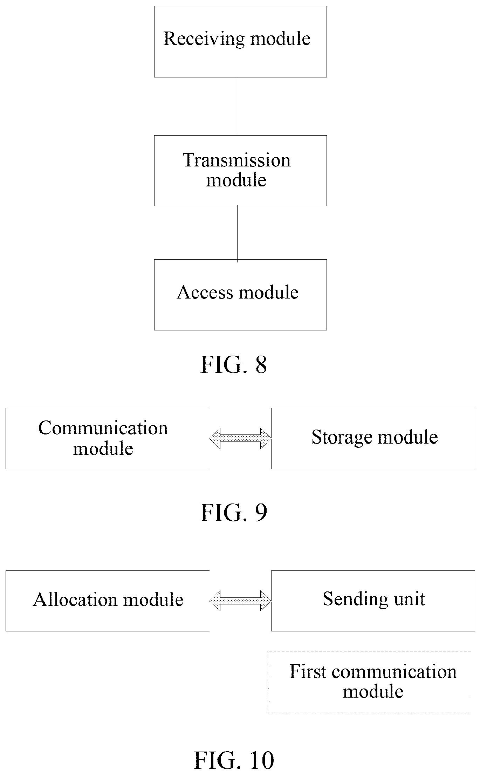

As shown in FIG. 8, an embodiment of the present invention also provides an apparatus for transmitting data during a handover procedure, which is arranged at a terminal. The apparatus includes a receiving module, a transmission module and an access module.

The receiving module is configured to receive RRC signaling sent by a source MeNB, herein the RRC signaling carries first resource configuration information corresponding to a target MeNB to be accessed by the terminal and second resource configuration information corresponding to an SeNB already accessed by the terminal.

The transmission module is configured to, when the terminal leaves a serving cell covered by the source MeNB, according to the second resource configuration information, maintain a radio connection with the serving cell of the SeNB, and retain a protocol layer at the SeNB corresponding to a Split bearer to be unchanged.

The access module is configured to, when the terminal leaves the serving cell covered by the source MeNB, initiate a random access to the target MeNB according to the first resource configuration information.

In an exemplary embodiment, the transmission module is further configured to,

transmit user plane data of the Split bearer with the SeNB.

In an exemplary embodiment, the access module is configured to,
according to the first resource configuration information, reconstruct or reset a protocol layer of an MCG bearer and a protocol layer at the target MeNB corresponding to the Split bearer, synchronize with a serving cell of the target MeNB, and initiate a random access to the serving cell of the target MeNB.

The transmission module is configured to transmit user plane data of the Split bearer with the SeNB in the following manner:
receiving scheduling information of the SeNB; and
transmitting user plane data on the Split bearer with the SeNB according to the scheduling information.

As shown in FIG. 9, an apparatus for transmitting data during a handover procedure is arranged at a source MeNB. The apparatus includes a communication module and a storage module.

The communication module is configured to receive a handover request acknowledgment message sent by a target MeNB. Herein, the handover request acknowledgment message carries first resource configuration information of the target MeNB and second resource configuration information of an SeNB connected with a source MeNB and the target MeNB respectively.

The storage module is configured to store the handover request acknowledgment message.

The communication module is further configured to send a data packet to the target MeNB. The data packet includes an unsuccessfully-transmitted PDCP SDU, a cached PDCP SDU and a subsequently-received PDCP SDU. The unsuccessfully-transmitted PDCP SDU includes a PDCP SDU of which a successfully-transmitted indication from the terminal or the SeNB is not received by a PDCP sub-layer located at the source MeNB. The cached PDCP SDU includes a PDCP SDU which is not transmitted to an RLC sub-layer of the terminal or the SeNB in a PDCP sub-layer cache located at the source MeNB. The subsequently-received PDCP SDU includes a PDCP SDU which is received from an S-GW after the terminal leaves a serving cell covered by the source MeNB.

An embodiment of the present invention provides an apparatus for transmitting data during a handover procedure, which is arranged at a target MeNB. As shown in FIG. 10, the apparatus includes an allocation module and a sending unit.

The allocation module is configured to allocate resources according to a judgment result obtained in a preparation stage of the handover procedure of a terminal.

The sending unit is configured to send a handover request acknowledgment message to a source MeNB. Herein, the handover request acknowledgment message carries first resource configuration information corresponding to the target MeNB and second resource configuration information corresponding to an SeNB already accessed by the terminal.

The apparatus further includes: a first communication module, configured to receive a data packet sent by the source MeNB. Herein, the data packet includes an unsuccessfully-transmitted PDCP SDU, a cached PDCP SDU and a subsequently-received PDCP SDU. The unsuccessfully-transmitted PDCP SDU includes a PDCP SDU of which a successfully-transmitted indication from the terminal or the SeNB is not received by a PDCP sub-layer located at the source MeNB. The cached PDCP SDU includes a PDCP SDU which is not transmitted to an RLC sub-layer of the terminal or the SeNB in a PDCP sub-layer cache located at the source MeNB. The subsequently-received PDCP SDU includes a PDCP SDU which is received from an S-GW after the terminal leaves a serving cell covered by the source MeNB.

The first communication module is further configured to receive a PDCP SDU which is sent by the source MeNB and corresponds to a Split bearer, process the received PDCP SDU corresponding to the Split bearer through a PDCP sub-layer, located at the target MeNB, of the Split bearer, and then forward it to the SeNB.

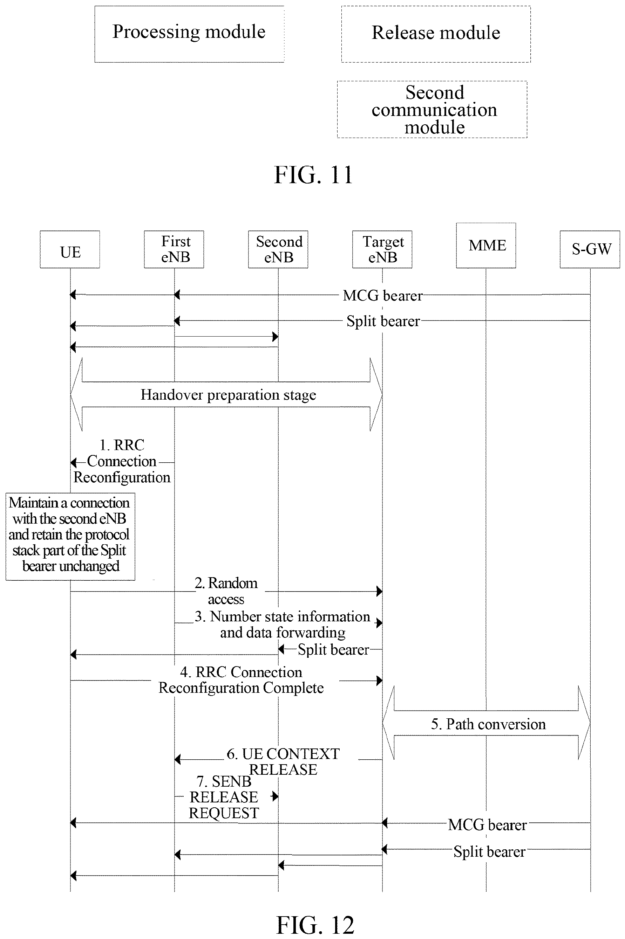

An embodiment of the present invention provides an apparatus for transmitting data during a handover procedure, which is arranged at an SeNB. As shown in FIG. 11, the apparatus includes a processing module.

The processing module is configured to, according to second resource configuration information, maintain a radio connection with a terminal, and retain a protocol layer of a Split bearer at the SeNB to be unchanged.

The apparatus further includes a release module, configured to delete the protocol layer of the Split bearer at the SeNB.

The release module is configured to,
clear a PDCP PDU which is sent by a source MeNB and cached in an RLC sub-layer and/or release a resource corresponding to the Split bearer, herein the resource corresponding to the Split bearer refers to a resource of the Split bearer at the SeNB which is not retained any longer.

The apparatus further includes a second communication module, configured to receive a PDCP PDU which is sent by the target MeNB, and send the PDCP PDU to the terminal through the radio connection with the terminal.

An embodiment of the present invention provides a system for transmitting data during a handover procedure, which includes the abovementioned terminal, source MeNB, target MeNB and SeNB.

The present invention will be further described herein below with reference to different embodiments. Specific embodiments take downlink data transmission for an example. Uplink data transmission (if an uplink bearer is transmitted through an SeNB) is similar to the downlink data transmission.

### Specific Embodiment one

A system architecture, a user plane mode and a scenario are as described in the specific implementation manner. During an inter-eNB handover procedure, according to an indication of a signaling a UE maintains a connection with an SeNB and resource configuration to be unchanged; and after receiving a data packet transferred by a target MeNB, the SeNB performs user plane data transmission scheduling on the UE. A specific flow is as shown in FIG. 12.

An S-GW sends data packets of an MCG bearer to a first eNB, and the first eNB continues to send the data packets of the MCG bearer to the UE. The S-GW sends data packets of a Split bearer to the first eNB. The first eNB sends part of the data packets of the Split bearer to the UE. The first eNB also sends part of data packets of the Split bearer to a second eNB, and the second eNB sends these data packets of the Split bearer to the UE.

The UE, the first eNB, the second eNB and the target eNB enter a handover preparation stage.

In step 1, according to an acknowledgment message fed back by the target MeNB in the preparation stage of the inter-eNB handover procedure, the first eNB (source MeNB) sends an RRC Connection Reconfiguration message 1 to the UE in an execution stage of the handover procedure. The message 1 is further required to carry relevant cells indicating the UE to retain a connection between the UE and the SeNB (i.e., second eNB in the figure) and resource configuration in addition to a new resource configuration (similar to a relevant standard definition) of the UE at the target MeNB side. In an exemplary embodiment, the cells are not included in mobilityControlInfo. When the message 1 is sent, the first eNB may stop sending data packets associated with the Split bearer to the SeNB.

According to the indication of the message 1, on one hand, the UE leaves a first eNB cell, synchronizes with a target cell and initiates a random access to the target cell; and that required to reconstruct/reset each protocol entity/protocol layer according to the new resource configuration includes two parts, namely protocol stacks of the MCG bearer and the Split bearer located at the first eNB. On the other hand, the UE maintains a connection between the UE and an SeNB cell, and a configuration corresponding to each protocol entity/protocol layer of the Split bearer located at the SeNB is unchanged.

In step 2, according to an indication sent by the target MeNB in the handover preparation stage, the first eNB forwards data packets of a bearer which need to be forwarded to the target MeNB, and sends data packet number state information of the bearer simultaneously. The present embodiment takes that for all data bearers data forwarding is needed as an example, then the forwarded data packets include: a PDCP SDU which is indicated to be successfully transmitted by a corresponding RLC entity (which may include an RLC entity located at the SeNB for the Split bearer) and is not received yet by a PDCP entity, located at the first eNB, of each data bearer when the first eNB sends the message 1 to the UE, an SDU which has not been transmitted in a PDCP entity cache of the first eNB, and a PDCP SDU subsequently and newly received from an S-GW.

After receiving data packets forwarded by the first eNB, the target MeNB performs a PDCP encapsulation on the data packets of the Split bearer, and transfers the data packets to the SeNB for transmission. If there are data packets which have not been sent in the RLC entity cache corresponding to the Split bearer when the SeNB receives a first PDCP PDU from the target MeNB, the SeNB will not send these data packets but abandon these data packets, that is, the SeNB will send data packets from the target MeNB as quickly as possible.

After access to the target cell is successful and the protocol entity/protocol layer successfully starts a new radio resource configuration, the UE sends a message 4 (RRC Connection Reconfiguration Complete) to the target MeNB. After receiving the message 4, the target MeNB may directly perform a user plane transmission scheduling on the UE. Thus, sending of the Split bearer includes: the target MeNB sends through a Uu interface between the target MeNB and the UE, and transfers some PDCP PDUs to the SeNB for sending.

In step 3, during a path conversion procedure in a handover completion stage, downlink data tunnel endpoints of all data bearers will be converted from the first eNB to the target MeNB. After receiving a message 6 (a UE CONTEXT RELEASE message) sent by the target MeNB, the first eNB indicates the SeNB to release an X2 connection associated with the UE between two nodes through a message 7. The message 7 may use an X2 control plane message (such as a SENB RELEASE REQUEST message) defined in a relevant standard, or may be a new message. The release procedure does not affect the scheduling of user plane data associated with the UE and resource configuration of the SeNB, and will not affect a context that is saved at the SeNB and associated with the UE.

### Specific Embodiment two

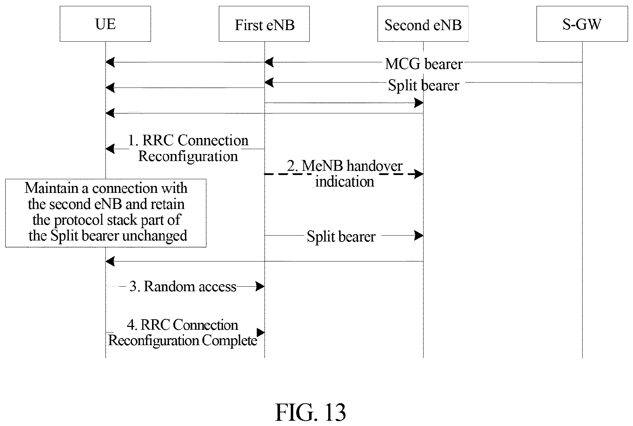

A system architecture, a user plane mode and a scenario are as described in the specific implementation manner. During an intra-eNB handover procedure, according to an indication of signaling, a UE maintains a connection with an SeNB and resource configuration to be unchanged. After a handover indication to the UE, a first eNB transfers data packets processed by a new configuration to the SeNB for further transmission. A specific flow is as shown in FIG. 13.

An S-GW sends data packets of an MCG bearer to the first eNB, and the first eNB continues to send the data packets of the MCG bearer to the UE. The S-GW sends data packets of a Split bearer to the first eNB. The first eNB sends part of the data packets of the Split bearer to the UE. The first eNB also sends part of data packets of the Split bearer to a second eNB, and the second eNB sends these data packets of the Split bearer to the UE.

In step 1, the first eNB decides to initiate an intra-eNB handover procedure, and at the same time judges that the connection between the UE and the SeNB and resource configuration are unchanged. The first eNB sends an RRC Connection Reconfiguration message 1 to the UE. The message 1 is further required to carry relevant cells indicating the UE to retain a connection between the UE and the SeNB and resource configuration in addition to a new resource configuration (similar to a relevant standard definition) of the UE at the first eNB. In an exemplary embodiment, the cells are not included in mobilityControlInfo.

According to the indication of the message 1, on one hand, the UE leaves a first eNB cell, synchronizes with a target cell and initiates a random access to the target cell. From the perspective of a protocol stack, that required to reconstruct/reset each protocol entity/protocol layer according to the new resource configuration includes two parts, namely protocol stacks of the MCG bearer and the Split bearer located at the first eNB. On the other hand, the UE maintains a connection between the UE and an SeNB cell, and a configuration corresponding to each protocol entity/protocol layer of the Split bearer located at the SeNB is unchanged.

In step 2, after sending the message 1 to the UE, a PDCP PDU transferred from the first eNB to the SeNB shall be a PDU encapsulated by a newly configured (reconstructed) PDCP entity. The PDU may include: a PDCP PDU which is indicated to be successfully transmitted by a corresponding RLC entity (which may include an RLC entity located at the SeNB) and is not received yet by a PDCP entity of the Split bearer located at the first eNB when the first eNB sends the message 1 to the UE, an SDU which has not been transmitted in a PDCP entity cache, and a PDCP SDU subsequently and newly received from an S-GW.

If there are data packets which have not been sent in the RLC entity cache corresponding to the Split bearer when the SeNB receives a first PDCP PDU processed with the new configuration from the first eNB, the SeNB will not send these data packets but abandon these data packets, that is, the SeNB will send the data packet from the target MeNB as quickly as possible. The abandoning action may be triggered in two manners. 1) The first eNB sends a control plane message 2 to the SeNB, and an example is taken with a name 'MeNB handover indication' in the figure. The message may use an SENB MODIFICATION REQUEST message or other X2 messages defined in a relevant standard, or may be a new message. 2) An indicator is carried in the first PDCP PDU processed with the new configuration, and shows that it is the first newly configured data packet.

In step 3, after access to the target cell is successful and the protocol entity/protocol layer successfully starts a new radio resource configuration, the UE sends a message 4 (RRC Connection Reconfiguration Complete) to the target MeNB. After receiving the message 4, the first eNB may recover a user plane transmission scheduling of the UE.

### Specific Embodiment three

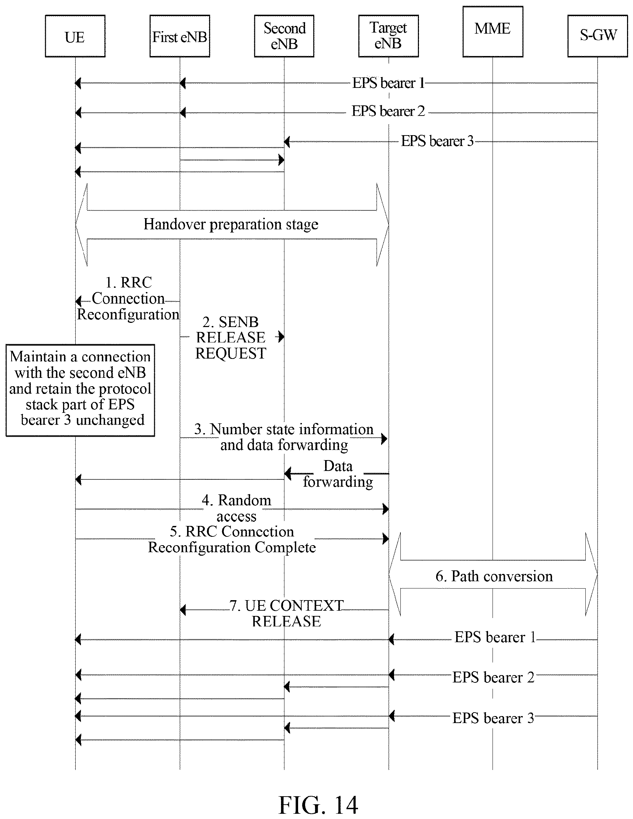

A system architecture, a user plane mode and a scenario are as described in the specific implementation manner. The present embodiment takes a UE configured with three data bearers as an example. Herein, an EPS bearer 1 and an EPS bearer 2 belong to the MCG bearer, and an EPS bearer 3 belongs to the Split bearer. During an inter-eNB handover procedure, a target MeNB decides to request an SeNB for re-adding some resources to provide service for the EPS bearer 2. That is, the EPS bearer 2 is converted into the Split bearer, and resource configuration of the EPS bearer 3 on a protocol stack located at the SeNB is maintained to be unchanged. A specific flow is as shown in FIG. 14.

In step 1, a first eNB sends an RRC Connection Reconfiguration message 1 to the UE, and according to an indication of the message 1, the UE leaves a first eNB cell, synchronizes with a target cell, initiates a random access to the target cell, and maintains a connection between the UE and an SeNB cell.

In terms of a protocol stack, the UE reconstructs/resets each protocol entity/protocol layer corresponding to the EPS bearer 1 and each protocol entity/protocol layer corresponding to a protocol stack, located at a target MeNB side, of the EPS bearer 3 according to a new resource configuration allocated by the target MeNB, and maintains a configuration for each protocol entity/protocol layer corresponding to the protocol stack, located at the target MeNB side, of the EPS bearer 3 to be unchanged. For the EPS bearer 2, the UE may firstly release the corresponding resource, and then reconstruct a protocol stack corresponding to the target MeNB according to the new resource configuration allocated by the target MeNB, and reconstruct a protocol stack corresponding to the SeNB according to a new resource configuration allocated by the SeNB.

In step 2, after receiving an acknowledgement message replied by the target MeNB in a handover preparation stage, on one hand, the first eNB may send a message 2 to the SeNB to indicate the SeNB to release an X2 connection associated with the UE between two nodes. The message 2 may use an X2 control plane message (such as a SENB RELEASE REQUEST message) defined in a relevant standard, or may be a new message. After receiving the message 2, if there are data packets which have not been sent from the first eNB in an RLC entity cache corresponding to the EPS bearer 3, the SeNB will abandon all the data packets.

On the other hand, according to the indication of the target MeNB in the handover preparation stage, the first eNB forwards data packets of a bearer which needs data packet forwarding to the target MeNB, and sends data packet number state information of the bearer simultaneously. The present embodiment takes that for all data bearers data forwarding is needed as an example. The forwarded data packets include: a PDCP SDU which is indicated to be successfully transmitted by a corresponding RLC entity (which may include an RLC entity located at the SeNB for the EPS bearer 3) and is not received yet by a PDCP entity, located at the first eNB, of each data bearer when the first eNB sends the message 1 to the UE, an SDU which has not been transmitted in a PDCP entity cache of the first eNB, and a PDCP SDU subsequently and newly received from an S-GW.

After receiving the data packets forwarded by the first eNB, the target MeNB encapsulates data packets of the EPS bearer 2 and the EPS bearer 3 through a PDCP entity, and transfers them to the SeNB for transmission. If there are data packets which have not been sent in the RLC entity cache corresponding to the Split bearer when receiving a first PDCP PDU from the target MeNB, the SeNB will not send these data packets but abandon these data packets, that is, the SeNB will send the data packet from the target MeNB as quickly as possible.

After access to the target cell is successful and the protocol entity/protocol layer successfully starts a new radio resource configuration, the UE sends a message 5 (RRC Connection Reconfiguration Complete) to the target MeNB. After receiving the message 5, the target MeNB may directly perform a user plane transmission scheduling of the UE. Thus, sending of the Split bearer includes: the target MeNB sends through a Uu interface between the target MeNB and the UE, and transfers some PDCP PDUs from the target MeNB to the SeNB for sending.

In step 3, during a path conversion procedure in a handover completion stage, downlink data tunnel endpoints of all data bearers will be converted from the first eNB to the target MeNB. After receiving an acknowledgment message of successful path conversion from a CN, the target MeNB indicates the first eNB to release a context associated with the UE.

It is important to note that before the handover procedure, the Split bearer transmitted by the SeNB may also be continued to be transmitted at the target MeNB by the decision of the target MeNB in the handover procedure (that is, the Split bearer is converted into the MCG bearer). However, resource configuration of the Split bearer part still transmitted by the SeNB is retained to be unchanged, and a connection between the UE and the SeNB is maintained in a handover process. In an exemplary embodiment, the SeNB may continuously perform a transmission scheduling of user plane data corresponding to the retained Split bearer for the UE in the handover process.

Those ordinary skilled in the art may understand that all or some of the steps in the abovementioned method may be completed by instructing relevant hardware (e.g., processor) through a program. The program may be stored in a computer-readable storage medium such as a read-only memory, a magnetic disk or an optical disk or the like. In an exemplary embodiment, all or some of the steps in the abovementioned embodiments may be implemented by using one or more integrated circuits. Accordingly, various modules/units in the abovementioned embodiments may be implemented in a form of hardware, and for example, corresponding functions thereof are implemented by means of integrated circuits. Various modules/units may also be implemented in a form of software function module, and for example, corresponding functions thereof are implemented by executing programs/instructions stored in a memory by the processor. The present invention is not limited to the combination of hardware and software in any specific form.

Those ordinary skilled in the art shall understand that the technical solution of the present invention can be modified or equivalently replaced without departing from the rule and scope of the technical solution of the present invention. These modifications or equivalent replacements shall fall within the scope of the claims of the present invention.

### Industrial Applicability

During a handover of a master serving eNB of a UE, the abovementioned technical solution can improve the data transmission performance between the UE and an SeNB, and is applied to various types of eNBs. During data transmission and/or movement of a UE in a DC state, when the master serving eNB accessed by the UE is handed over, a user plane between the UE and the connected SeNB will not be interrupted, and data can be continuously transmitted. The data transmission performance and throughput of the UE are improved, and the usage efficiency of radio resources is raised, and control plane signaling is saved.

## Claims

1. A method for transmitting data during a handover procedure, applied to a terminal, the method comprising:
receiving Radio Resource Control, RRC, signaling sent by a source Master evolved Node B, MeNB, wherein the RRC signaling carries first resource configuration information corresponding to a target MeNB to be accessed by the terminal and second resource configuration information corresponding to a Secondary evolved Node B, SeNB, already accessed by the terminal; and
when the terminal leaves a serving cell covered by the source MeNB, according to the second resource configuration information, maintaining a radio connection with a serving cell of the SeNB, retaining a protocol layer at the SeNB corresponding to a Split bearer to be unchanged, and according to the first resource configuration information initiating a random access to the target MeNB.

2. The method according to claim 1, further comprising:
after retaining the protocol layer part at the SeNB corresponding to the Split bearer to be unchanged, transmitting user plane data of the Split bearer with the SeNB.

3. The method according to claim 1, wherein the initiating a random access to the target MeNB according to the first resource configuration information comprises:
according to the first resource configuration information, reconstructing or resetting a protocol layer of a Master Cell Group, MCG, bearer and a protocol layer at the target MeNB corresponding to the Split bearer, synchronizing with a serving cell of the target MeNB, and initiating the random access to the serving cell of the target MeNB.

4. The method according to claim 2, wherein the transmitting user plane data of the Split bearer with the SeNB comprises:
receiving scheduling information of the SeNB; and
transmitting the user plane data on the Split bearer with the SeNB according to the scheduling information.

5. A method for transmitting data during a handover procedure, applied to a target Master evolved Node B, MeNB, the method comprising:
allocating resources according to a judgment result obtained in a preparation stage of the handover procedure of a terminal, and sending a handover request acknowledgment message to a source MeNB, wherein the handover request acknowledgment message carries first resource configuration information corresponding to the target MeNB and second resource configuration information corresponding to a Secondary evolved Node B, SeNB, already accessed by the terminal.

6. The method according to claim 5, further comprising:
receiving an unsuccessfully-transmitted Packet Data Convergence Protocol, PDCP, Service Data Unit, SDU, sent by the source MeNB, a cached PDCP SDU and a subsequently-received PDCP SDU, wherein
the unsuccessfully-transmitted PDCP SDU comprises a PDCP SDU of which a successfully-transmitted indication from the terminal or the SeNB is not received by a PDCP sub-layer located at the source MeNB, and the cached PDCP SDU comprises a PDCP SDU, which is not transmitted to a Radio Link Control, RLC, sub-layer of the terminal or the SeNB, in a PDCP sub-layer cache located at the source MeNB, and the subsequently-received PDCP SDU comprises a PDCP SDU which is received from a Serving Gateway, S-GW, after the terminal leaves a serving cell covered by the source MeNB.

7. The method according to claim 6, further comprising:
receiving a PDCP SDU which is sent by the source MeNB and corresponds to a Split bearer, processing the received PDCP SDU corresponding to the Split bearer through a PDCP sub-layer, located at the target MeNB, of the Split bearer, and then forwarding the processed PDCP SDU to the SeNB.

8. A method for transmitting data during a handover procedure, applied to a Secondary evolved Node B, SeNB, the method comprising:
according to second resource configuration information corresponding to the SeNB already accessed by a terminal, maintaining a radio connection with the terminal, and retaining a protocol layer of a Split bearer at the SeNB to be unchanged.

9. The method according to claim 8, further comprising:
receiving a notification from a target Master evolved Node B, MeNB, and deleting the protocol layer of the Split bearer at the SeNB.

10. The method according to claim 9, wherein the deleting the protocol layer of the Split bearer at the SeNB comprises:
clearing a Packet Data Convergence Protocol, PDCP, Protocol Data Unit, PDU, which is sent by a source MeNB and cached in a Radio Link Control, RLC, sub-layer and/or releasing a resource corresponding to the Split bearer, wherein the resource corresponding to the Split bearer refers to a resource of the Split bearer at the SeNB which is not retained any longer.

11. The method according to any one of claims 8 to 10, further comprising:
receiving a PDCP PDU which is sent by the target MeNB, and sending the PDCP PDU to the terminal through the radio connection with the terminal.

12. An apparatus for transmitting data during a handover procedure, arranged at a terminal, the apparatus comprising:
a receiving module, configured to receive Radio Resource Control, RRC, signaling sent by a source Master evolved Node B, MeNB, wherein the RRC signaling carries first resource configuration information corresponding to a target MeNB to be accessed by the terminal and second resource configuration information corresponding to a Secondary evolved Node B, SeNB, already accessed by the terminal;
a transmission module, configured to, when the terminal leaves a serving cell covered by the source MeNB, according to the second resource configuration information, maintain a radio connection with a serving cell of the SeNB, and retain a protocol layer at the SeNB corresponding to a Split bearer to be unchanged; and
an access module, configured to, when the terminal leaves the serving cell covered by the source MeNB, initiate a random access to the target MeNB according to the first resource configuration information.

13. The apparatus according to claim 12, wherein the transmission module is further configured to,
transmit user plane data of the Split bearer with the SeNB.

14. The apparatus according to claim 12, wherein the access module is configured to,
according to the first resource configuration information, reconstruct or reset a protocol layer of a Master Cell Group, MCG, bearer and a protocol layer at the target MeNB corresponding to the Split bearer, synchronize with a serving cell of the target MeNB, and initiate the random access to the serving cell of the target MeNB.

15. The apparatus according to claim 13, wherein the transmission module is configured to transmit user plane data of the Split bearer with the SeNB in the following manner:
receiving scheduling information of the SeNB; and
transmitting the user plane data on the Split bearer with the SeNB according to the scheduling information.

16. An apparatus for transmitting data during a handover procedure, arranged at a target Master evolved Node B, MeNB, the apparatus comprising:
an allocation module, configured to allocate resources according to a judgment result obtained in a preparation stage of the handover procedure of a terminal; and
a sending unit, configured to send a handover request acknowledgment message to a source MeNB, wherein the handover request acknowledgment message carries first resource configuration information corresponding to the target MeNB and second resource configuration information corresponding to a Secondary evolved Node B, SeNB, already accessed by the terminal.

17. The apparatus according to claim 16, further comprising:
a first communication module, configured to receive an unsuccessfully-transmitted Packet Data Convergence Protocol, PDCP, Service Data Unit, SDU, sent by the source MeNB, a cached PDCP SDU and a subsequently-received PDCP SDU, wherein the unsuccessfully-transmitted PDCP SDU comprises a PDCP SDU of which a successfully-transmitted indication from the terminal or the SeNB is not received by a PDCP sub-layer located at the source MeNB, the cached PDCP SDU comprises a PDCP SDU which is not transmitted to a Radio Link Control, RLC, sub-layer of the terminal or the SeNB in a PDCP sub-layer cache located at the source MeNB, and the subsequently-received PDCP SDU comprises a PDCP SDU which is received from a Serving Gateway, S-GW, after the terminal leaves a serving cell covered by the source MeNB.

18. The apparatus according to claim 17, wherein
the first communication module is further configured to receive a PDCP SDU which is sent by the source MeNB and corresponds to a Split bearer, process the received PDCP SDU corresponding to the Split bearer through a PDCP sub-layer, located at the target MeNB, of the Split bearer, and then forward the processed PDCP SDU to the SeNB.

19. An apparatus for transmitting data during a handover procedure, arranged at a Secondary evolved Node B, SeNB, the apparatus comprising:
a processing module, configured to, according to second resource configuration information corresponding to the SeNB already accessed by a terminal, maintain a radio connection with the terminal, and retain a protocol layer of a Split bearer at the SeNB to be unchanged.

20. The apparatus according to claim 19, further comprising a release module, configured to receive a notification from a target Master evolved Node B, MeNB, and delete the protocol layer of the Split bearer at the SeNB.

21. The apparatus according to claim 20, wherein the release module is configured to,
clear a Packet Data Convergence Protocol, PDCP, Protocol Data Unit, PDU, which is sent by a source MeNB and cached in a Radio Link Control, RLC, sub-layer and/or release a resource corresponding to the Split bearer, wherein the resource corresponding to the Split bearer refers to a resource of the Split bearer at the SeNB which is not retained any longer.

22. The apparatus according to any one of claims 19 to 21, further comprising: a second communication module, configured to receive a PDCP PDU which is sent by the target MeNB, and send the PDCP PDU to the terminal through the radio connection with the terminal.

23. A system for transmitting data during a handover procedure, comprising: the terminal according to any one of claims 12 to 15, a source MeNB, the target MeNB according to any one of claims 16 to 18, and the SeNB according to any one of claims 19 to 22, wherein
the source MeNB comprises:
a communication module, configured to receive the handover request acknowledgment message sent by the target MeNB, and send the Radio Resource Control, RRC, signaling to the terminal.

24. A computer storage medium where a computer-executable instruction is stored, wherein the computer-executable instruction is used for executing a method according to any one of claims 1 to 4.

25. A computer storage medium where a computer-executable instruction is stored, wherein the computer-executable instruction is used for executing a method according to any one of claims 5 to 7.

26. A computer storage medium where a computer-executable instruction is stored, wherein the computer-executable instruction is used for executing a method according to any one of claims 8 to 11.
